# DEMANDE DE BREVET EUROPEEN

(11) **EP 1 224 865 A1**
(43) Date de publication de la demande: **24.07.2002**
(21) Numéro de dépôt: 02290113.6
(22) Date de dépôt: 16.01.2002
(51) Int. Cl.: A21C 1/14, B01F 15/00, A21C 1/02, B01F 13/04

(54) **Mélangeur muni d'un système de dégagement du couvercle de cuve**

(30) Priorité: 17.01.2001 FR 0100602
(71) Demandeur: VMI, 85600 Montaigu (FR)
(72) Inventeur: Vannier, Guillaume, 44100 Nantes (FR); Fisson, G-rard, 85600 Saint Hilaire de Loulay (FR)
(74) Mandataire: Geismar, Thierry

(57) **Abrégé**

Le mélangeur (1) comprend un bâti (2) formant socle qui supporte d'une part une cuve (8) pour contenir la matière à mélanger et d'autre part une colonne porteuse (3), ladite cuve (8) étant recouverte par un couvercle (9) de cuve, ladite colonne porteuse (3) comportant à sa partie supérieure une tête (5) renfermant un moteur entraînant un arbre vertical (6) portant à sa partie inférieure un outil (7) apte à mélanger et/ou à brasser la matière contenue dans la cuve (8). Il comporte aussi des moyens permettant de déplacer le couvercle (9) de cuve entre une position de fermeture dans laquelle il recouvre l'ouverture de la cuve (9) et une position d'ouverture dans laquelle il est maintenu sensiblement horizontalement au-dessus de la tête (5).

## Description

L'invention concerne un mélangeur, notamment un pétrin, muni d'un système ergonomique de dégagement du couvercle de cuve.

On connaît déjà des mélangeurs pour l'industrie alimentaire notamment dans le domaine de la boulangerie.

De tels mélangeurs comprennent généralement un bâti formant socle qui supporte d'une part une cuve pour contenir la matière à mélanger et d'autre part une colonne porteuse.

Ladite colonne porteuse comporte généralement à sa partie supérieure une tête renfermant un moteur entraînant un arbre vertical portant à sa partie inférieure un outil apte à mélanger et/ou à brasser la matière contenue dans la cuve.

Ladite cuve est la plupart du temps recouverte par un couvercle de cuve pour des raisons de sécurité.

Il s'agit le plus souvent, soit d'un couvercle amovible, soit d'un couvercle présentant une ouverture ou une trappe permettant ainsi un accès à la cuve pour la remplir ou pour contrôler la consistance de la préparation.

Ces couvercles connus de l'état de la technique ne remplissent pas leur fonction de manière optimale.

En effet, dans le cas où le couvercle présente une simple ouverture, il n'encombre pas l'espace car il reste sur la cuve mais l'accès à celle-ci est alors difficile.

De même, dans le cas où le couvercle est amovible, il permet de libérer la surface de la cuve mais l'accès reste difficile en raison de la proximité du couvercle relevé et de la cuve.

Le but de l'invention est de palier les inconvénients de l'art antérieur en proposant un mélangeur ergonomique muni d'un couvercle de cuve se dégageant complètement de la cuve.

Suivant l'invention, le mélangeur est caractérisé en ce qu'il comporte des moyens permettant de déplacer le couvercle de cuve entre une position de fermeture dans laquelle il recouvre l'ouverture de la cuve et une position d'ouverture dans laquelle il est maintenu sensiblement horizontalement au-dessus de la tête.

Le couvercle de cuve se dégage ainsi complètement de la surface de la cuve et, tout en restant horizontal pour faciliter la préhension, vient prendre une position haute qui ne gène pas les manoeuvres car il se place juste au-dessus de la tête, dans son prolongement.

Selon un mode de réalisation, lesdits moyens de déplacement du couvercle de cuve comprennent, de chaque côté du mélangeur, deux leviers sensiblement parallèles reliés de façon articulée d'une part au couvercle de cuve et d'autre part à la partie supérieure de la colonne porteuse, lesdits leviers formant avec leurs articulations respectives, un parallélogramme déformable.

Selon un mode de réalisation, ladite colonne porteuse comporte des moyens pour commander le soulèvement ou l'abaissement de la tête par rapport à la cuve, lesdits moyens coopérant avec lesdits leviers formant des parallélogrammes déformables pour commander le déplacement du couvercle de cuve entre lesdites positions de fermeture et d'ouverture.

D'autres particularités et avantages de l'invention apparaîtront encore dans la description ci-après.

Aux dessins annexés, donnés à titre d'exemples non limitatifs :
- La figure 1 est une vue schématique latérale d'un mélangeur selon un mode de réalisation de l'invention, le couvercle de cuve étant en position fermée ;
- La figure 2 est une vue schématique latérale d'un mélangeur selon un mode de réalisation de l'invention, le couvercle de cuve étant en position ouverte ;
- La figure 3 est une vue de face du mélangeur représenté à la figure 1 ;
- La figure 4 est une vue de face du mélangeur représenté à la figure 2 ;
- La figure 5 est une vue éclatée d'un dispositif à parallélogrammes déformables apte à guider le couvercle de cuve selon le mode de réalisation de l'invention représenté aux figures 1 à 4.

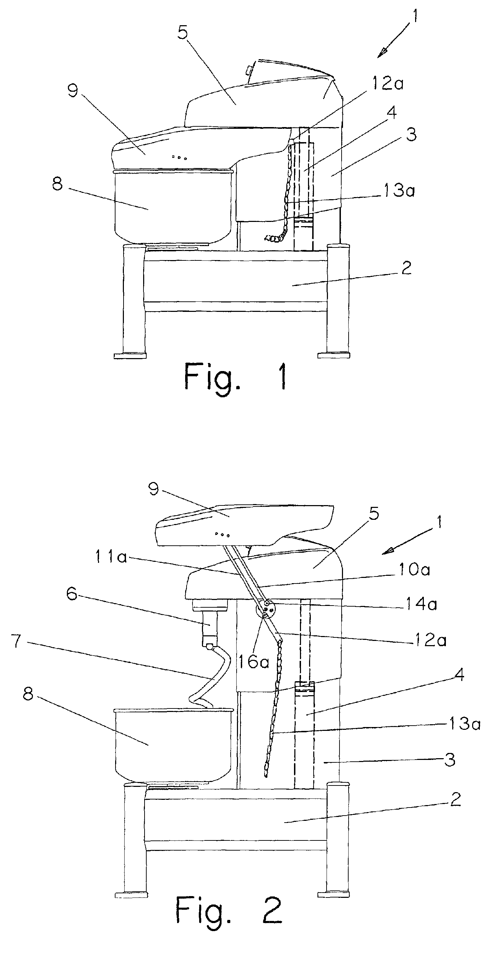

Dans la réalisation représentée sur les figures 1 à 5,le mélangeur (1) comprend un bâti (2) formant socle qui supporte d'une part une cuve (8) pour contenir la matière à mélanger et d'autre part une colonne porteuse (3), ladite cuve (8) étant recouverte par un couvercle (9) de cuve, ladite colonne porteuse (3) comportant à sa partie supérieure une tête (5) renfermant un moteur entraînant un arbre vertical (6) portant à sa partie inférieure un outil (7) apte à mélanger et/ou à brasser la matière contenue dans la cuve (8).

Conformément à l'invention, ledit mélangeur (1) comporte des moyens permettant de déplacer le couvercle (9) de cuve entre une position de fermeture dans laquelle il recouvre l'ouverture de la cuve (8) et une position d'ouverture dans laquelle il est maintenu sensiblement horizontalement au-dessus de la tête (5).

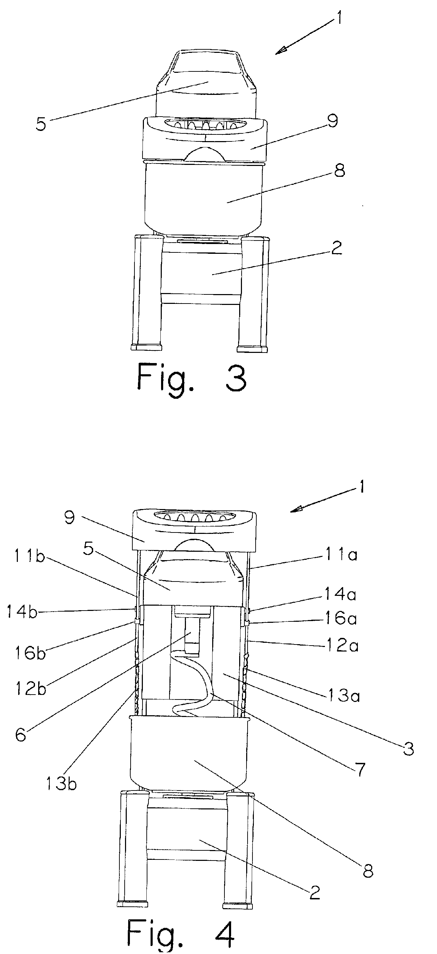

En position fermée, le couvercle (9) recouvre la surface ouverte de la cuve (8) pendant la rotation de l'outil (7) du mélangeur (1) de manière à garantir un fonctionnement sécurisé (cf. figures 1 et 3).

En position ouverte, le couvercle (9) est horizontal, au dessus de la tête (5) libérant complètement la cuve (8) (cf. figures 2 et 4).

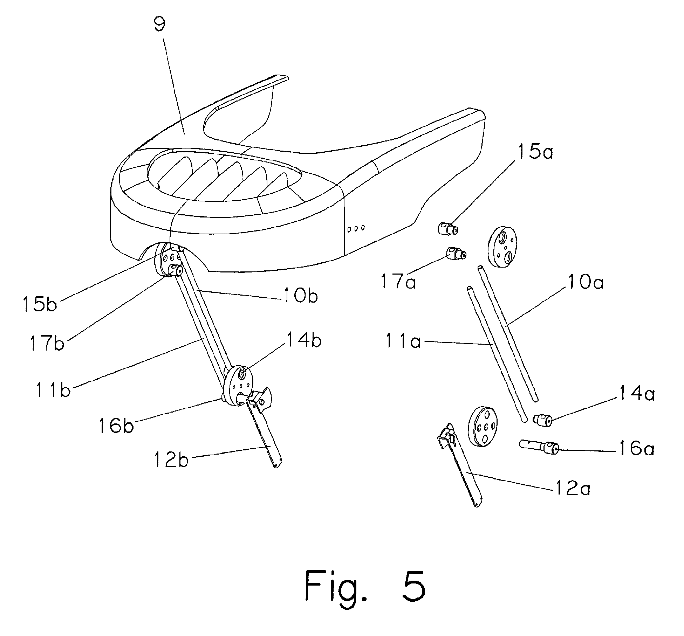

Selon ce mode de réalisation, le guidage lors de l'élévation du couvercle (9) de cuve en le maintenant horizontal est assuré par une paire de leviers (10a, 11a), (10b, 11b) parallèles de chaque côté du mélangeur, lesdites paires de leviers formant chacune, avec ses articulations (14a, 15a; 16a,17a), (14b, 15b ; 16b,17b) respectives, un parallélogramme déformable (cf. figure 5).

Lorsque le mélangeur (1) est un modèle dont la tête (5) ne se soulève pas, le soulèvement du couvercle (9) de cuve est manuel.

Dans le cas d'un mélangeur à tête (5) non relevable et à soulèvement du couvercle (9) de cuve manuel, la force de relevage du couvercle (9) de cuve est fournie par l'utilisateur qui va le relever, suivant une trajectoire définie par le dispositif de guidage, jusqu'à une position haute où ledit couvercle (9) pourra rester dans ladite position haute à l'aide d'un dispositif de blocage ou de maintien quelconque (tel que des clips).

Les figures 1 à 5 fournissent un exemple de dispositif de maintien du couvercle (9) de cuve en position haute selon lequel les deux paires de leviers (10a, 11a), (10b, 11b) et leurs articulations (14a, 15a ; 16a,17a), (14b, 15b ; 16b, 17b) sont agencées de manière à ce que lorsque le couvercle (9) de cuve est en position haute, les leviers inférieurs (11a), (11b) s'appuient, par gravité, sur les articulations (14a), (14b) des leviers supérieurs (10a), (10b) au niveau de la colonne porteuse (3).

Le couvercle (9) de cuve peut ainsi occuper une positions basse stable et une position haute stable.

Dans le cas d'un mélangeur (1) à tête (5) relevable comme représenté aux figures 1 à 4, le relevage de la tête (5) peut commander le relevage du couvercle (9) de cuve à l'aide d'un bras (12a), (12b) de chaque côté du mélangeur, solidaire d'au moins un des leviers (10a, 11a), (10b,11b) formant parallélogramme déformable et ledit bras (12a), (12b) étant aussi relié au bâti (2) par l'intermédiaire d'une chaînette (13a), (13b).

Le mélangeur (1) à tête (5) relevable représenté aux figures 1 à 4 fonctionne de la manière indiquée ci-après.

L'utilisateur peut relever le couvercle (9) de cuve de deux manières : soit de manière automatique simultanément au relevage de la tête (5), soit de manière manuelle la tête (5) étant abaissée.

Dans le cas d'un relevage du couvercle (9) de cuve automatique, lorsque l'utilisateur commande l'ouverture du mélangeur (1), la tête (5) se soulève sous la poussée d'un vérin (4), alors les chaînettes (13a), (13b) se tendent tirant sur les bras (12a), (12b) et provoquant le pivotement des leviers (11a), (11b) composant les parallélogrammes déformables. Le couvercle (9) de cuve s'ouvre ainsi simultanément au soulèvement de la tête (5).

Le système est conçu de telle manière que la course du vérin (4) ne permet pas d'atteindre la position finale de maintien du couvercle (9) de cuve. En position ouverte, le couvercle (9) de cuve reste alors maintenu par les chaînettes (13a), (13b) tendues, si bien que lorsque l'utilisateur commande la fermeture du mélangeur (1), le couvercle (9) de cuve se rabat sous l'effet de son propre poids simultanément à l'abaissement de la tête (5).

Dans le cas d'un relevage manuel du couvercle (9) de cuve (1a tête (5) étant abaissée), par exemple pour ajouter des ingrédients ou contrôler la consistance de la pâte, l'utilisateur lève le couvercle (9) de cuve en exerçant dessus une force verticale vers le haut. Les deux parallélogrammes déformables se chargent alors de guider ledit couvercle (9) de cuve le long d'une trajectoire menant à sa position haute.

Le couvercle (9) de cuve étant dans sa position haute, l'agencement des leviers (10a, 11a), (10b, 11b) et de leurs articulations (14a, 16a), (14b, 16b) au niveau de la colonne (3) permet audit couvercle (9) de cuve, au-delà d'une certaine course de relevage, de rester stable grâce à son poids.

Pour refermer le couvercle (9) de cuve, l'utilisateur le pousse alors légèrement vers l'avant de manière à le dégager de sa position stable. Le poids du couvercle (9) de cuve l'aide alors à se rabattre vers sa position basse.

## Revendications

1. Mélangeur (1) comprenant un bâti (2) formant socle qui supporte d'une part une cuve (8) pour contenir la matière à mélanger et d'autre part une colonne porteuse (3), ladite cuve (8) étant recouverte par un couvercle (9) de cuve, ladite colonne porteuse (3) comportant à sa partie supérieure une tête (5) renfermant un moteur entraînant un arbre vertical (6) portant à sa partie inférieure un outil (7) apte à mélanger et/ou à brasser la matière contenue dans la cuve (8), **caractérisé en ce que** ledit mélangeur comporte des moyens permettant de déplacer le couvercle (9) de cuve entre une position de fermeture dans laquelle il recouvre l'ouverture de la cuve (9) et une position d'ouverture dans laquelle il est maintenu sensiblement horizontalement au-dessus de la tête (5).

2. Mélangeur conforme à la revendication 1, **caractérisé en ce que** lesdits moyens de déplacement du couvercle (9) de cuve comprennent, de chaque côté du mélangeur (1), deux leviers (10a, 11a), (10b, 11b) sensiblement parallèles reliés de façon articulée d'une part au couvercle (9) de cuve et d'autre part à la partie supérieure de la colonne porteuse (3), lesdits leviers formant avec leurs articulations (14a, 15a, 16a, 17a), (14b, 15b, 16b, 17b) respectives, un parallélogramme déformable.

3. Mélangeur conforme à la revendication 2, **caractérisé en ce que** ladite colonne porteuse (3) comporte des moyens pour commander le soulèvement ou l'abaissement de la tête (5) par rapport à la cuve (8), lesdits moyens coopérant avec lesdits leviers (10a, 11a), (10b, 11b) formant des parallélogrammes déformables pour commander le déplacement du couvercle (9) de cuve entre lesdites positions de fermeture et d'ouverture.

4. Mélangeur conforme à la revendication 3, **caractérisé en ce qu'**il comprend en outre, de chaque côté du mélangeur (1), un bras (12a, 12b) dont l'une des extrémités est solidaire, à proximité des articulations (14a, 16a), (14b, 16b) des leviers (10a, 11a), (10b, 11b) formant un parallélogramme déformable au niveau de la colonne porteuse, d'au moins un de ces leviers (10a, 11a), (10b, 11b), et dont l'autre extrémité est reliée à un lien souple (13a, 13b) lui-même étant relié à un point fixe de la colonne porteuse (3) de telle sorte que le soulèvement de la tête (5) provoque la tension du lien souple (13a, 13b) et le pivotement dudit bras (12a, 12b) et desdits leviers (10a, 11a), (10b, 11b) et donc le soulèvement du couvercle (9) de cuve.

5. Mélangeur conforme à la revendication 4, **caractérisé en ce que** ledit lien souple est une chaînette (13a, 13b).

6. Mélangeur conforme à la revendication 4 ou 5, **caractérisé en ce que** la longueur du lien souple (13a, 13b) est telle qu'elle permet audit lien de n'être mis en tension qu'à partir d'une certaine course de soulèvement de la tête (5) de manière à soulever le couvercle (9) de cuve avec un certain retard sur le soulèvement de la tête (5).

7. Mélangeur selon l'une quelconque des revendications précédentes **caractérisé en ce qu'**il comporte un dispositif de maintien du couvercle (9) de cuve en position haute.

8. Mélangeur conforme à l'une quelconque des revendications 2 à 6 **caractérisé en ce qu'**il comporte un agencement des deux paires de leviers (10a, 11a), (10b, 11b) et de leurs articulations (14a, 15a, 16a, 17a), (14b, 15b, 16b, 17b) formant des parallélogrammes déformables permettant aux leviers inférieurs (11a) (11b) de s'appuyer par gravité sur les articulations (14a), (14b) des leviers supérieurs (10a), (10b) au niveau de la colonne porteuse (3) lorsque le couvercle de cuve est en position haute.
